# EUROPÄISCHE PATENTSCHRIFT

(11) **EP 2 156 981 B1**
(45) Veröffentlichungstag und Bekanntmachung des Hinweises auf die Patenterteilung: **23.11.2011**
(21) Anmeldenummer: 09168271.6
(22) Anmeldetag: 20.08.2009
(51) Int. Cl.: B60P 1/64, B66F 7/08

(54) **Flachlifter**
Flat lifter
Elévateur plat

(30) Priorität: 20.08.2008 DE 102008039224
(43) Veröffentlichungstag der Anmeldung: 24.02.2010
(73) Patentinhaber: MHG GmbH, 33609 Bielefeld (DE)
(72) Erfinder: Klier, Reinhard, 33613 Bielefeld (DE)
(74) Vertreter: Hofmann, Harald

(56) Entgegenhaltungen:
- EP-A2- 0 983 897
- WO-A1-95/04698
- WO-A1-2007/088178
- DE-C1- 19 831 546
- DE-U1- 20 214 080
- US-A- 3 266 774

## Beschreibung

Die vorliegende Erfindung bezieht sich auf Containerhebevorrichtungen für Transportfahrzeuge, wie durch die Patentansprüche beschrieben.

Ein wesentlicher Teil des heutigen Güterverkehrs wird mit Containern abgewickelt, die über unterschiedliche Verkehrssysteme, wie Schiffe, Bahn, LKW, bewegt werden und an Umschlagplätzen wie Containerhäfen, etc. von einem Verkehrssystem auf das andere umgesetzt werden.

Der LKW nimmt in dieser Transportkette bei der Auslieferung des jeweiligen Containers an den letztendlichen Bestimmungsort eine wesentliche Rolle ein, da nur der LKW die nötige Transportflexibilität aufweist, um Container auch an Orte liefern zu können, die weder mit dem Schiff noch auf der Schiene zu erreichen sind.

Die grosse Flexibilität des LKW's beim Transport von Containern ergibt sich unter anderem daraus, dass die zu transportierenden Container, die im abgestellten Zustand auf Standfüßen stehen, vom LKW unterfahren werden können und durch eine Höhenveränderung der Aufnahmeelemente des LKW angehoben werden können.

Problematisch bei der Aufnahme der Container durch die LKW's ist die Tatsache, dass die Abstellhöhen der Container variieren können und zwischen 970mm und 1320mm liegen. Es handelt sich hierbei um Höhen, die zumindest teilweise durch höhenvariablen Luftfederungen der LKW's nicht mehr in eine Art und Weise abgedeckt werden könne, dass ein Transport der Container möglich wird, ohne dass die Standbeine des jeweiligen Containers demontiert werden müssen.

Um dieser Problematik zu begegnen, sind Containerhebevorrichtungen zur Montage an oder auf LKW's entwickelt worden, die eine Überbrückung der entsprechenden Standhöhen der Container ermöglichen sollen.

So zeigt das Dokument DE 101 09 029 A1 eine Aufnahme- und Umsetzvorrichtung für Wechselbehälter auf Fahrzeugen, die eine Hubeinrichtung und einen Hubrahmen aufweist, der über gelenkige Verbindungselemente am Fahrzeugrahmen oder an einem am Fahrzeugrahmen befestigten Hilfsrahmen angeordnet ist. Der Hubeinrichtung ist dabei zum parallelen Anheben des Hubrahmens eine Steuereinrichtung und mindestens zwei pneumatisch betriebene Hubbälge zugeordnet.

Problematisch bei dieser Lösung ist einerseits, dass Luft kompressibel ist und sich dadurch ein Federn der Bälge bei Belastung nicht vermeiden lässt. Der aufgesetzte Container gerät somit leicht in Schwingungen, wenn das Fahrzeug, auf dem die Vorrichtung montiert ist, bewegt wird, es sei den die Vorrichtung würde durch zusätzliche Dämpfungsmaßnahmen daran gehindert werden.

Das Dokument EP 0 117 239 offenbart eine Anordnung für LKWs umfassend einen vertikal anhebbaren Hubrahmen zur Handhabung entfernbarer Lasten, wobei der Hubrahmen durch Verbindungsarme sowie Zylinderkolbeneinheiten angehoben und gesenkt wird. Das Problem bei dieser Vorrichtung ist, dass durch den einfachen Hebel der Verbindungsarme einerseits große Kräfte seitens des Zylinderkolbens aufzubringen sind und darüber hinaus vom Zylinderkolben keine oder nur sehr geringe Querkräfte aufgenommen werden können, was aber beim angehobenen Transport von zB Containern mit großen Lasten. Die gesamten Querkräfte müssen somit von den einfachen Hebeln der Vorrichtungen aufgenommen werden, die entsprechend stabil und aufwendig sein müssen. Darüber hinaus ist auch diese Vorrichtung noch sehr raumgreifend und macht erhebliche Umbauten an den mit dem Lifter auszustattenden Fahrzeugen notwendig, was in Zeiten begrenzter Budgets auch im Transport Gewerbe im höchsten Masse nachteilig ist.

Schließlich zeigt das Dokument EP 0 938 897 A2 eine Vorrichtung zur Montage auf Fahrzeugen für die höhenveränderliche Aufnahme von Lasten, mit einem Hubrahmen zur Aufnahme der Last sowie damit verbundenen, verstellbaren Einrichtungen, zur Befestigung am Fahrzeug, wobei die verstellbaren Einrichtungen aus zueinander verschwenkbaren und durch ein längenveränderliches Antriebselement verbundenen Scherenhebeln bestehen. Diese Vorrichtung führt aber zu ungewünschten Bewegungen des Hubrahmens bei der Auf- und Abbewegung desselben.

Es besteht daher nach wie vor der Bedarf an einer Containerhebevorrichtungen für Transportfahrzeuge, die möglichst einfach aufgebaut ist, die wenig Bauhöhe aufweist, möglichst geringe Kräfte benötigt, einfach zu montieren sowie einfach zu handhaben ist und vor allen Dingen keine Umbauten am Fahrzeug, wie das Versetzen von Tanks etc. nötig macht.

Vorgesehen ist eine Vorrichtung zur Montage auf Fahrzeugen für die höhenveränderliche Aufnahme von Lasten, mit einem Hubrahmen zur Aufnahme der Last sowie zumindest zwei damit verbundenen, verstellbaren Einrichtungen, zur Befestigung am Fahrzeug, wobei die verstellbaren Einrichtungen aus jeweils zwei zueinander verschwenkbaren und durch ein längenveränderliches Antriebselementverbundenen Scherenhebeln bestehen und zumindest eine der verstellbaren Einrichtungen mit einer Führungsschwinge zur Begrenzung von Horizontalbewegungen versehen ist.

Die Hubkrafterzeugung erfolgt nur durch die Scherenhebelanordnungen zwischen Hubrahmen und Fahrzeug, wobei die Scheren vorzugsweise an einem vorderen und hinteren Containerarm des Hubrahmens vorgesehen sind und durch das jeweilige längenveränderliche Antriebselement geöffnet werden. Aus einer flach liegenden Anfangsposition wird unter annähernd gleich bleibender Hubkraft, ein Gesamthub des Hubrahmens von 500mm erreicht.

Damit die Scherenanordnung nicht um ihren unteren Angelpunkt wegkippt, wird sie durch die Führungschwinge in horizontal annähernd gleich bleibender Position geführt. Da die Schwinge während des Hubes an dem Ende, an dem sie mit der Schere verbunden ist, eine Kreisbogenbewegung ausführt und sich daher eine horizontale Relativbewegung ergibt, ist die Schwinge am oberen Scherenhebel an der Stelle angelenkt, an der eine entgegengerichtete horizontale Bewegung des Schwingenhebelanlenkpunktes am Hubrahmen erfolgt. Dadurch ergibt sich ein gradliniger Hub mit vernachlässigbar kleiner (ca. 16 - 22mm) horizontaler Verschiebung. Die Schwinge wird durch diese Anordnung auch nicht mit großen Kräften des längsveränderlichen Antriebes beansprucht. Die Schwinge muss nur Kräfte die durch Abbremsung und Beschleunigung des Fahrzeugs entstehen, aufnehmen. Die Scherenhebel sind vorzugsweise so breit und stabil gestaltet, dass sie die seitlichen Führungskräfte aufnehmen. Es sind keine weiteren Führungseinrichtungen erforderlich.

Die Vorrichtung ist dabei vorzugsweise derart ausgestaltet, dass das längenveränderliche Antriebselement ein Hydraulikzylinder ist, der die Scherenhebel auseinanderdrückt und wesentliche Teile der Hubkraft aufbringt.

Die zwei zueinander verschwenkbaren Scherenhebel weisen jeweils eine im weitesten Sinne dreieckige Kontur auf, wobei die Eckbereiche der Dreiecke jeweils Anlenkpunkte definieren, und die Anordnung der Anlenkpunkte der Kontur eines fiktiven Kniehebels entspricht. Die Ausbildung der Scherenhebel in flächiger Dreiecksform verleiht ihnen zusätzliche Stabilität und erlaubt die Übertragung und Aufnahme großer Stützkräfte.

Die Vorrichtung nach ist weiterhin bevorzugt derart ausgestaltet, dass sich das längenveränderliche Antriebselement zwischen dem Endpunkt eines fiktiven Kniehebels und dem Kniepunkt des anderen fiktiven Kniehebels erstreckt. Diese sehr kompakte Anordnung des Antriebselementes ermöglicht eine extrem raumsparende Gestaltung der Gesamtvorrichtung, was letztendlich eine extrem einfach Montage auf einem Fahrzeug möglicht macht, ohne dass Teile des Fahrzeuges versetzt oder umgebaut werden müssen um die Montage der Vorrichtung zu gewährleisten.

Die Scherenhebel, das Antriebselement und die Führungsschwinge sind ebenso bevorzugt in nebeneinander liegenden vertikalen Ebenen angeordnet, so dass sie im abgesenkten Zustand des Hubrahmens nicht aufeinander sondern nebeneinander zu liegen kommen.

Die Vorrichtung kann sich schließlich auch dadurch auszeichnen, dass die fahrzeugrahmenseitigen Elemente der Vorrichtung auf Trägermodulen angeordnet sind, die sich direkt oder über Adapterelemente mit dem jeweiligen Fahrzeugrahmen verbinden lassen, so dass auf sehr einfach Art und Weise eine große Bandbreite von Fahrzeugen mit der Vorrichtung ausgestattet werden kann, ohne dass aufwendige Anpassungen notwendig sind.

Weitere Eigenschaften und Vorteile der Erfindung ergeben sich aus der Beschreibung einer bevorzugten Ausführungsform im Zusammenhang mit den beigefügten Zeichnungen, die jedoch lediglich erläuternd und in keiner Weise einschränkend sein soll; darin zeigt:
Fig. 1 eine Seitenansicht einer bevorzugten Ausführungsform der Vorrichtung in angehobener Position;
Fig. 2 die Seitenansicht nach Fig. 1 in abgesenkter Position;
Fig. 3 eine Draufsicht auf die Ausführungsform nach Fig. 1;
Fig. 4 eine Detailansicht der rechten Seite der Vorrichtung nach Fig. 1; und
Fig. 5 eine Seitenansicht einer weiteren Ausführungsform in angehobener Position.

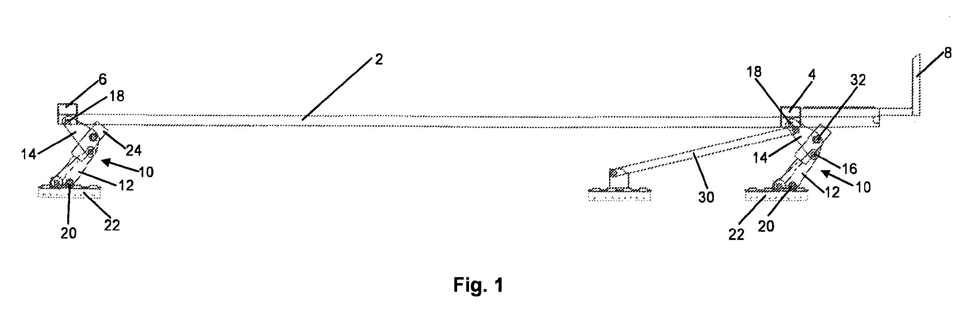

Die Fig. 1 zeigt in beispielhafter Weise eine Seitenansicht einer bevorzugten Ausführungsform der Vorrichtung in angehobener Position. Zu erkennen ist dabei zunächst ein Hubrahmen 2 zur Aufnahme eines Containers, mit zwei Containerarmen 4, 6, auf denen ein Container (nicht gezeigt) zur Auflage kommt. Der Figur 1 ist darüber hinaus ein vorderer Anschlag 8 zu entnehmen, der dazu dient, den Container genau auf dem Hubrahmen 2 zu positionieren.

An den Containerarmen 4, 6 sind jeweils verstellbare Scherenhebelanordnungen 10 angeordnet, die aus einem unterer Scherenhebel 12 und einem oberen Scherenhebel 14 bestehen, die über eine Achse 16 schwenkbar miteinander verbunden sind. Der obere Scherenhebel 14 is dabei am Anlenkpunkt 18 mit dem Hubrahmen 2 verbunden und der untere Scherenhebel 12 ist am Anlenkpunkt 20 mit einem Montagesockel 22 verbunden, über den die Vorrichtung mit einem Fahrzeugchassis (nicht dargestellt) verbunden wird.

Zwischen den Scherenhebeln 12 und 14 ist ein Hydraulikzylinder 24 angeordnet, der an den Anlenkpunkten 26 mit dem unteren Scherenhebel 12 und an den Anlenkpunkten 28 mit den oberen Scherenhebeln 14 verbunden ist.

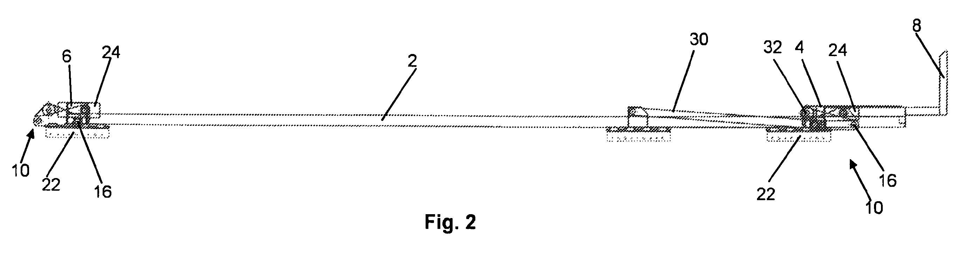

Die Hubkrafterzeugung erfolgt dabei nur durch die Scherenhebelanordnungen 10 zwischen Hubrahmen 2 und Fahrzeug (nicht gezeigt), wobei die Scheren durch Hydraulikzylinder 24 geöffnet und geschlossen werden. Aus einer flach liegenden Anfangsposition wie in Fig. 2 wird unter annähernd gleich bleibender Hubkraft, ein Gesamthub des Hubrahmens von 500mm auf eine Position wie in Fig. 1 erreicht.

Damit die jeweilige Scherenanordnung 10 nicht um ihren unteren Angelpunkt 20 wegkippt, wird die Vorrichtung durch eine einzelne Führungsschwinge 30 in horizontal annähernd gleich bleibender Position geführt. Da die Schwinge 30 während des Hubes an dem Ende, an dem sie mit der vorderen Scherenanordnung 10 verbunden ist, eine Kreisbogenbewegung ausführt und sich daher eine horizontale Relativbewegung ergibt, ist die Führungsschwinge 30 am oberen Scherenhebel 14 am Anlenkpunkt 32 angelenkt, an der eine entgegengerichtete horizontale Bewegung des Schwingenhebelanlenkpunktes 18 am Hubrahmen 2 erfolgt. Dadurch ergibt sich ein gradliniger Hub mit vernachlässigbar kleiner horizontaler Verschiebung von ca. 2mm. Die Schwinge 30 wird durch diese Anordnung auch nicht mit den Kräften des Hydraulikzylinders 24 beansprucht. Die Schwinge 30 muss nur Kräfte die durch Abbremsung und Beschleunigung des Fahrzeugs entstehen, aufnehmen. Die Scherenhebel 12 und 14 sind als flächige Dreieckskonturelemente so breit und stabil gestaltet, dass sie die seitlichen Führungskräfte aufnehmen können.

Der untere Anlenkpunkt 34 der Führungsschwinge 30 liegt ebenfalls auf einem Montagesockel 36, der am Fahrzeugchassis montiert wird.

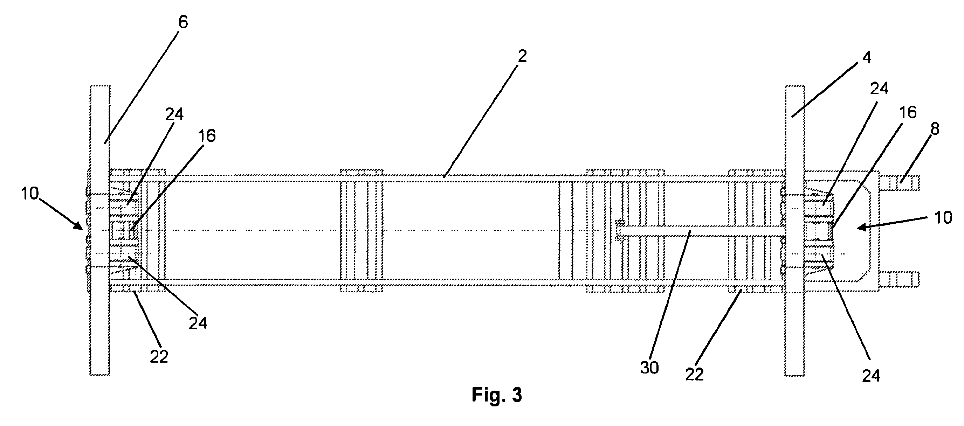

Die Scherenhebel 12 und 14, der Hydraulikzylinder 24 und die Führungsschwinge 30 sind, wie sich aus Fig. 3 ergibt ebenso bevorzugt in nebeneinander liegenden vertikalen Ebenen angeordnet, so dass sie im abgesenkten Zustand des Hubrahmens 2 nebeneinander zu liegen kommen.

Die Figur 2 zeigt die Ausführungsform der Fig. 1 in abgesenkter Position und die Figur 3 die Ausführungsform der Figur 1 in der Draufsicht.

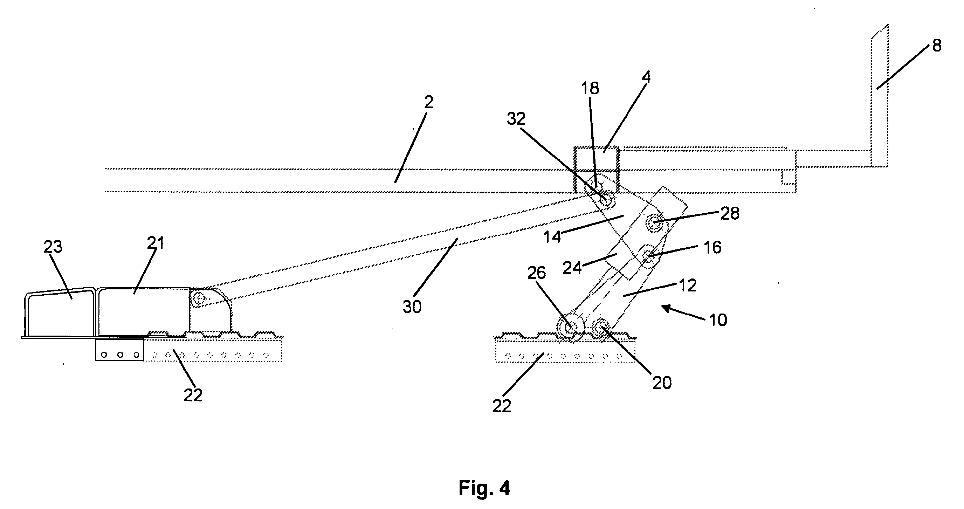

Die Figur 4 zeigt im Wesentlichen einen Ausschnitt der Figur 1, wobei weitere Komponenten gezeigt sind, die in den Figuren 1 bis 3 nicht gezeigt sind. Bei diesen Komponenten handelt es sich einerseits um ein Gehäuse 21 zur Aufnahme der hydraulischen und elektrischen Steuerkomponenten der Vorrichtung sowie ein an das Gehäuse 21 angeflanschten Öltank 23 für die Hydraulik. Wie unschwer zu erkennen ist, sind sowohl das Gehäuse 21 als auch der Tank 32 in flacher Anordnung mit der Montagekonsole 22 vorgesehen, wobei die Höhe des Gehäuses 21 und des Tanks 23 so gewählt ist, dass beide im abgesenkten Zustand der Vorrichtung maximal bündig mit der Oberkannte des Rahmens 2 abschließt.

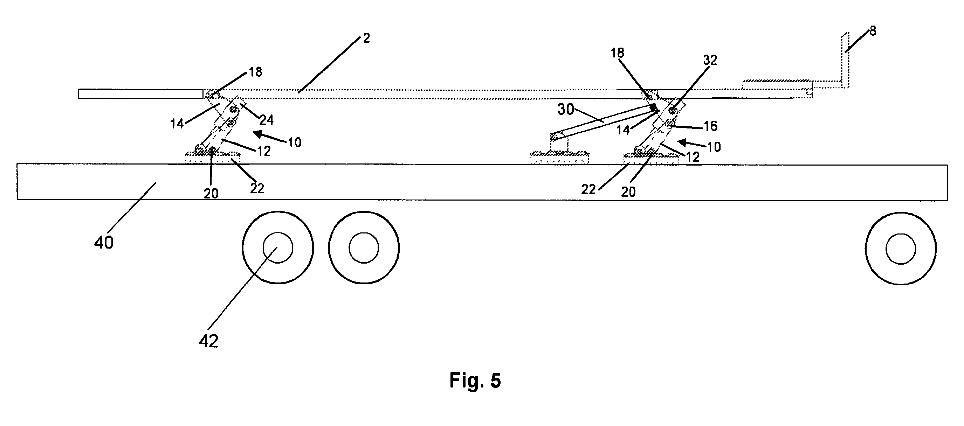

Die Figur 5 schließlich zeigt die Seitenansicht einer weiteren Ausführungsform zusammen mit der schematischen Darstellung eines Fahrzeugchassis, auf dem die Vorrichtung montiert ist. Identische Teile sind wiederum mit identischen Bezugszeichen versehen, wie in den vorhergehenden Figuren.

Wie der Figur 5 ohne weiteres zu entnehmen ist, sind die Scherenhebelanordnungen 10 bei dieser Ausführungsform jeweils nach innen versetzt und zwar um jeweils 650mm, was dazu führt, dass insbesondere der hintere LKW-Rahmenüberhang 40 von der letzten Achse 42 aus deutlich geringer beim Anheben der Vorrichtung auf Biegen beansprucht wird. Des Weiteren wird der LKW, auf dem die Vorrichtung montiert ist, deutlich weniger auf Verdrehung belastet.

Die verstellbaren Einrichtungen 10 sind in allen Ausführungsformen in vierfacher Ausführung vorgesehen, wobei jeweils zwei Einrichtungen (10) seitlich außerhalb der Längsmittellinie der Vorrichtung angeordnet sind.

Schließlich kann jede der Einrichtungen 10 jeweils mit sich zu den Außenseiten der Vorrichtung erstreckenden und im Wesentlichen flächigen Gelenkhebelelementen (nicht dargestellt) verbunden sein, wobei sowohl die fahrzeugseitigen als auch die vorrichtungsseitigen Gelenkachsen der flächigen Gelenkhebelelemente fluchten mit den Gelenkachsen der Scherenhebel 12, 14 der Einrichtungen 10. Die einzelnen Gelenkhebelelemente sind dabei vorzugsweise jeweils mit den Scherenhebeln 12, 14 verschweißt und bilden zusammen mit diesen integrale Elemente. Auf diese Weise können sehr große Kippmomente aufgenommen werden.

Die Vorrichtung bietet eine Reihe von Vorteilen gegenüber den bekannten Systemen.

So ermöglicht sie die einfache Montage auf jedes LKW-Fabrikat, mittels fahrzeugspezifischer Befestigungssätze auf jedes für diesen Einsatz in Frage kommendes Chassis. Die gesamte Technik der Vorrichtung einschl. Steuerung und Ölbehälter sind in der Aufbauhöhe untergebracht.

Aufgrund der flachen Bauweise, die durch die Scherenhebelmechanik mit integriertem Hydraulikzylinder ermöglicht wird, sind keine schweren, seitlichen Montagekonsolen nötig, was das aufwendige und kostspielige Versetzen von Batteriekästen, Auspuffanlagen, Luftbehältern, Dieseltanks, Staukästen usw. unnötig macht. Des Weiteren kann deswegen auch ohne weiteres im LKW-Heck ein Tiefkuppelbock für das Anhängen eines Starrdeichselanhängers, oder eine Unterfahrladebordwand montiert werden, was mit seitlichen Konsolen nur erschwert, oder unmöglich ist.

Bei der Vorrichtung nach Maßgabe der vorliegenden Erfindung gibt es keine Bodenfreiheitsprobleme. Bei konventionellen Systemen mit seitlich vertikal montierten Hydraulikzylindern, gibt es speziell bei niedrigen Fahrzeugen, welche große Hubhöhen benötigen, um auch hoch abgestellte Container (1320mm), aufnehmen zu können, teilweise extreme Bodenfreiheitsprobleme, die auch durch die zusätzliche Hubmöglichkeit der LKW eigenen Luftfederung nicht ausreichend kompensiert werden kann.

Die Vorrichtung gemäß der Erfindung hebt 21t in ca. 8 Sekunden mit einer Nebenantriebshydraulik und 20 t in ca. 40 Sekunden mit einer Elektrohydraulik und ist wegen der Flachbauart ohne seitliche, vertikal angebrachte Hydraulikzylinder im Eigengewicht ca. 30 bis 50 % leichter als die konventionelle Bauart, so dass das Gesamtgewicht des fertigen Fahrzuges mit montierter Vorrichtung gemäß der Erfindung wesentlich leichter ist als vergleichbare Systeme herkömmlicher Bauart.

## Patentansprüche

1. Vorrichtung zur Montage auf Fahrzeugen für die höhenveränderliche Aufnahme von Lasten, mit einem Hubrahmen (2) zur Aufnahme der Last sowie zumindest zwei damit verbundenen, verstellbaren Einrichtungen, zur Befestigung am Fahrzeug, wobei die verstellbaren Einrichtungen aus jeweils zwei zueinander verschwenkbaren und durch ein längenveränderliches Antriebselement verbundenen Scherenhebeln (12, 14) bestehen und zumindest eine der verstellbaren Einrichtungen mit einer Führungsschwinge (30) zur Begrenzung von Horizontalbewegungen versehen ist, **dadurch** gekennzeich-net, dass die Führungsschwinge (30) am oberen Scherenhebel (14) an der Stelle angelenkt ist, an der eine entgegengerichtete horizontale Bewegung des Schwingenhebelanlenkpunktes am Hubrahmen (2) erfolgt.

2. Vorrichtung nach Anspruch 1, **dadurch gekennzeichnet, dass** das längenveränderliche Antriebselement ein Hydraulikzylinder (24) ist.

3. Vorrichtung nach Anspruch 1 oder 2, **dadurch gekennzeichnet, dass** die zwei zueinander verschwenkbaren Scherenhebel (12, 14) jeweils eine im weitesten Sinne dreieckige Kontur aufweisen, wobei die Eckbereiche der Dreiecke jeweils Anlenkpunkte (18, 20) definieren, und die Anordnung der Anlenkpunkte (18, 20) der Kontur eines fiktiven Kniehebels entspricht.

4. Vorrichtung nach einem der vorhergehenden Ansprüche, **dadurch gekennzeichnet, dass** sich das längenveränderliche Antriebselement zwischen dem Endpunkt eines fiktiven Kniehebels und dem Kniepunkt des anderen fiktiven Kniehebels erstreckt.

5. Vorrichtung nach einem der vorhergehenden Ansprüche, **dadurch gekennzeichnet, dass** die Scherenhebel (12, 14), das Antriebselement und die Führungsschwinge (30) in nebeneinander liegenden vertikalen Ebenen angeordnet sind, so dass sie im abgesenkten Zustand des Hubrahmens (2) nicht aufeinander sondern nebeneinander zu liegen kommen.

6. Vorrichtung nach einem der vorhergehenden Ansprüche, **dadurch gekennzeichnet, dass** die fahrzeugrahmenseitigen Elemente der Vorrichtung auf Trägermodulen (22) angeordnet sind, die sich direkt oder über Adapterelemente mit dem jeweiligen Fahrzeugrahmen (40) verbinden lassen.

7. Vorrichtung nach einem der vorhergehenden Ansprüche, **dadurch gekennzeichnet, dass** die Scherenhebel (12), das Antriebselement und die Führungsschwinge (30) in nebeneinander liegenden vertikalen Ebenen angeordnet sind.

8. Vorrichtung nach einem der vorhergehenden Ansprüche, **dadurch gekennzeichnet, dass** zumindest ein Gehäuse (21) zur Aufnahme von hydraulischen und/oder elektrischen Steuerelementen vorgesehen ist, sowie ein an das Gehäuse (21) angeflanschter Hydrauliköltank (23), wobei das Gehäuse (21) und der Tank (23) eine Höhe aufweisen die maximal der minimalen Erstreckung der Gesamtvorrichtung rechtwinklig zur Montagefläche der Vorrichtung entspricht.

9. Vorrichtung nach Anspruch 8, **dadurch gekennzeichnet, dass** das Gehäuse (21) und der Hydrauliköltank (23) auf einem Trägermodul (22) montiert sind.

10. Vorrichtung nach einem der vorhergehenden Ansprüche, **dadurch gekennzeichnet, dass** die verstellbaren Einrichtungen (10) in vierfacher Ausführung vorgesehen sind, wobei jeweils zwei Einrichtungen (10) seitlich außerhalb der Längsmittellinie der Vorrichtung angeordnet sind.

11. Vorrichtung nach Anspruch 10, **dadurch gekennzeichnet, dass** die Einrichtungen (10) jeweils mit sich zur Außenseite der Vorrichtung erstreckenden und im Wesentlichen flächigen Gelenkhebelelementen verbunden sind, zur Aufnahme von Kippmomenten,
wobei die Gelenkachsen der Gelenkhebelelemente fluchten mit den Gelenkachsen der Einrichtungen (10).

## Claims

1. An apparatus for mounting on a vehicle for a height adjustable reception of a load, comprising an elevating frame (2) for the reception of the load and connected to at least two adjustable devices for the attachment at the vehicle, wherein the adjustable devices each comprise two levers (12, 14) that are slueable with respect to each other and are connected with a length-adjustable drive element and wherein at least one of the adjustable devices is provided with a guiding rocker (30) for limiting horizontal movements, **characterized in that** the guiding rocker (30) is linked to the upper lever (14) at a position, at which an oppositely directed horizontal movement of the link position of the rocker occurs at the elevating frame (2).

2. The apparatus of claim 1, **characterized in that** the length-adjustable drive element is a hydraulic cylinder (24).

3. The apparatus of claim 1 or 2, **characterized in that** the two levers (12, 14) that are slueable with respect to each other each have a triangular contour in the broadest sense, wherein the corner areas of the triangles each define link positions (18, 20), and the arrangement of the link positions (18, 20) corresponds to the contour of a fictitious bent lever.

4. The apparatus of any one of the preceding claims, **characterized in that** the length-adjustable drive element extends between the end of a fictitious bent lever and the knee point of a second fictitious bent lever.

5. The apparatus of any one of the preceding claims, **characterized in that** the two levers (12, 14) that are slueable with respect to each other, the drive element and the guiding rocker (30) are arranged in vertical planes that are arranged adjacently with respect to each other, such that they are arranged besides each other and not on top of each other in the lowered state of the elevating frame (2).

6. The apparatus of any one of the preceding claims, **characterized in that** vehicle frame side elements of the apparatus are arranged on support modules (22) that are connectable directly or via adapter elements to the corresponding vehicle frame (40).

7. The apparatus of any one of the preceding claims, **characterized in that** the levers (12), the drive element and the guiding rocker (30) are arranged in vertical planes that are arranged adjacently with respect to each other.

8. The apparatus of any one of the preceding claims, **characterized in that** at least one housing (21) for reception of hydraulic and/or electric control elements is provided, and a hydraulic oil tank (23) is flange-mounted to the housing (21), wherein the housing (21) and the tank (23) provide a height that corresponds to the minimum extension of the entire apparatus or less, perpendicular to the mounting surface of the apparatus.

9. The apparatus of claim 8, **characterized in that** the housing (21) and the hydraulic oil tank (23) are mounted on a support module (22).

10. The apparatus of any one of the preceding claims, **characterized in that** the adjustable devices (10) are provided in a number of four, wherein two of the devices are arranged laterally with respect to the longitudinal center line of the apparatus.

11. The apparatus of any one of the preceding claims, **characterized in that** the devices (10) are each connected with substantially planar articulated lever elements that extend to the exterior of the apparatus, for the reception of tilting momentums, wherein the articulation axes of the articulated lever elements are aligned with the articulation axes of the devices (10).

## Revendications

1. Système pour le montage sur véhicule pour une réception ajustable en hauteur de charges, avec un cadre élévateur (2) pour la réception de la charge et au moins deux dispositifs ajustables, qui y sont reliés, pour fixation au véhicule, dans lequel les dispositifs ajustables comprennent chacun deux leviers (12, 14) qui peuvent basculer l'un par rapport à l'autre, et qui sont reliés avec un élément d'actionnement à longueur ajustable et dans lequel au moins l'un des dispositifs ajustables est prévu avec une coulisse de guidage (30) pour limiter les mouvements horizontaux, **caractérisé en ce que** la bielle de guidage (30) est reliée sur le levier supérieur (14) au niveau d'une position pour laquelle un mouvement horizontal directement opposé à la position de liaison du levier de bielle a lieu au niveau du cadre élévateur (2).

2. Système selon la revendication 1, **caractérisé en ce que** l'élément d'actionnement à longueur ajustable est un cylindre hydraulique (24).

3. Système selon la revendication 1 ou 2, **caractérisé en ce que** les deux leviers (12, 14) qui peuvent basculer l'un par rapport à l'autre comprennent chacun un contour triangulaire au sens le plus large, dans lequel les zones de coins des triangles définissent respectivement des positions de liaison (18, 20), et l'agencement des positions de liaison (18, 20) correspond au contour d'un levier coudé fictif.

4. Système selon l'une quelconque des revendications précédentes, **caractérisé en ce que** l'élément d'actionnement à longueur ajustable s'étend entre le point d'extrémité d'un levier coudé fictif et le point de coude d'un autre levier coudé fictif.

5. Système selon l'une quelconque des revendications précédentes, **caractérisé en ce que** les leviers (12, 14), l'élément d'actionnement, et la bielle de guidage (30) sont agencés dans des plans verticaux adjacents les uns par rapport aux autres, de sorte que ils sont agencés dans l'état le plus inférieur du cadre élévateur (2), l'un à côté de l'autre et non l'un au dessus de l'autre.

6. Système selon l'une quelconque des revendications précédentes, **caractérisé en ce que** des éléments côté cadre du véhicule sont agencés sur des modules de support (22) qui peuvent être reliés directement ou par l'intermédiaire d'élément adaptateur au cadre de véhicule correspondant (40).

7. Système selon l'une quelconque des revendications précédentes, **caractérisé en ce que** les leviers (12), l'élément d'actionnement, et la bielle de guidage (30) sont agencés dans des plans verticaux agencés les uns à côté des autres.

8. Système selon l'une quelconque des revendications précédentes, **caractérisé en ce que** au moins un boitier (21) est prévu pour la réception d'éléments de contrôle hydrauliques et/ou électriques, ainsi qu'un réservoir hydraulique (23) agencé au flanc du boitier (21), dans lequel le boitier (21) et le réservoir (22) ont une hauteur qui correspond au maximum à l'extension minimum du système dans son ensemble perpendiculairement à la surface de montage du système.

9. Système selon la revendication 8, **caractérisé en ce que** le boitier (21) et le réservoir hydraulique (23) sont montés sur un module de support (22).

10. Système selon l'une quelconque des revendications précédentes, **caractérisé en ce** les dispositifs ajustables (10) sont prévus au nombre de quatre, dans lequel deux dispositifs sont agencés latéralement par rapport de la ligne centrale longitudinale du système.

11. Système selon l'une quelconque des revendications précédentes, **caractérisé en ce** les dispositifs (10) sont chacun reliés avec des éléments de levier d'articulation sensiblement plans et s'étendant vers l'extérieur du dispositif, pour la réception de moments de bascule, les axe d'articulation des éléments de leviers d'articulation sont alignés avec les axes d'articulation des dispositifs.
